# EUROPÄISCHE PATENTSCHRIFT

(11) **EP 1 045 785 B1**
(45) Veröffentlichungstag und Bekanntmachung des Hinweises auf die Patenterteilung: **12.11.2003**
(21) Anmeldenummer: 98966913.0
(22) Anmeldetag: 28.12.1998
(51) Int. Cl.: B60T 8/36, F16K 17/04

(54) **DRUCKREGELVENTIL, INSBESONDERE ZUR DRUCKMITTELSTEUERUNG IN SCHLUPFGEREGELTEN, HYDRAULISCHEN BREMSANLAGEN**
PRESSURE REGULATING VALVE FOR REGULATING A HYDRAULIC FLUID IN ANTI-SLIP HYDRAULIC BRAKE SYSTEMS
SOUPAPE DE REGLAGE DE PRESSION, EN PARTICULIER POUR LA REGULATION DU FLUIDE SOUS PRESSION DANS DES INSTALLATIONS DE FREINAGE HYDRAULIQUES A REGULATION ANTI-PATINAGE

(30) Priorität: 09.01.1998 DE 19800496
(43) Veröffentlichungstag der Anmeldung: 25.10.2000
(73) Patentinhaber: Continental Teves AG & Co. oHG, 60488 Frankfurt (DE)
(72) Erfinder: SEITZ, Karlheinz, D-64653 Lorsch (DE); SCHULZ, Christian, D-64560 Riedstadt (DE)
(86) Internationale Anmeldenummer: EP9808477
(87) Internationale Veröffentlichungsnummer: WO99035017

(56) Entgegenhaltungen:
- WO-A-96/24514
- DE-A- 4 028 606
- DE-A- 4 129 638
- US-A- 3 072 143
- US-A- 4 542 852

## Beschreibung

Die Erfindung betrifft ein Druckregelventil, insbesondere zur Druckmittelsteuerung in schlupfgeregelten, hydraulischen Bremsanlagen, nach dem Oberbegriff des Anspruchs 1.

Derartige konventionelle, hinreichend bekannte Druckregelventile zur Durchflußsteuerung von Fluiden bei schlupfgeregelten, hydraulischen Bremsanlagen finden vielfältige praktische Verwendung.

Es sind bereits Druckregelventile bekannt, z. B. sei auf die DE 40 28 606 verwiesen, die zur Steuerung des Fluides mit einem in einem Ventilgehäuse geführten, sowie federkraftbeaufschlagten Ventilstößel versehen sind, dessen der Druckfeder abgewandtes Ventilstößelende als Kugelsitzventil ausgebildet ist, um in der Ventilschließstellung leckagefrei den Druckmittelanschluß zu unterbrechen.

Um während der Hubbewegung des Ventilstößels die Geräuschentwicklung und damit die Übertragung von Körperschall zu mindern, ist zwischen der Druckfeder und dem Ventilgehäuse ein am Ventilstößel anliegendes Reibelement angeordnet, das eine Dämpfung der Schwingung und damit der Schaltgeräusche bewirkt.

Zur Herstellung des entsprechenden Reibelementes bedarf es jedoch aufwendiger Bearbeitungsschritte, um unter allen Betriebszuständen die gewünschte Funktionsfähigkeit sicherzustellen, weshalb das vorbeschriebene Reibelement als verbesserungswürdig anzusehen ist.

Aus der US-A-4 542 852 ist ein Vibrationsdämpfer für ein thermostatisches Expansionsventil bekannt, der eine Ringkontur aufweist, an der mehrere Finger angebracht sind, die sich in Richtung eines relativ in einem Ventilgehäuse gleitbeweglichen mechanischen Aktuators erstrecken.

Daher ist es die Aufgabe der Erfindung, ein Druckregelventil der eingangs genannten Gattung dahingehend zu verbessern, daß mit einfachen kostengünstigen Mitteln, bei gleichzeitiger Gewährleistung der Funktionssicherheit, eine maßgebliche Reduzierung des Ventilschaltgeräusches erzielt wird.

Erfindungsgemäß wird die gestellte Aufgabe durch die den Patentanspruch 1 kennzeichnenden Merkmale gelöst.

Weitere Merkmale und vorteilhafte Einzelheiten der Erfindung werden nachfolgend anhand der Beschreibung eines Ausführungsbeispieles erläutert.

Es zeigt:
- Figur 1: einen Längsschnitt durch ein Druckregelventil mit dem am Ventilstößel reibschlüssig anliegenden Reibelement,
- Figur 2: eine Draufsicht auf ein nicht erfindungsgemäßes Reibelement.

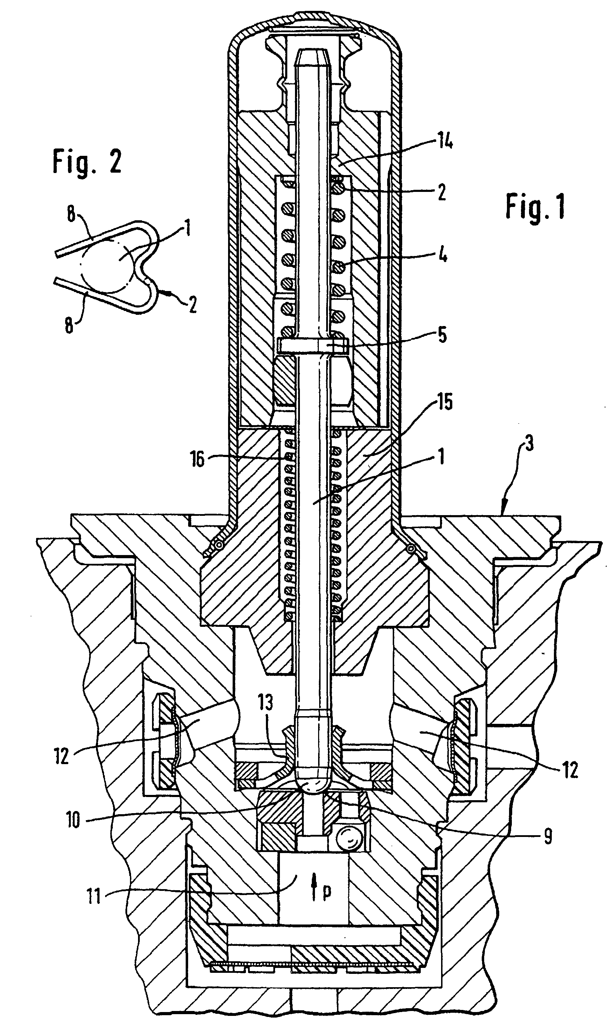

Die Figur 1 zeigt ein Druckregelventil geeignet zur Druckmittelsteuerung in schlupfgeregelten hydraulischen Bremanlagen, mit einem in einem Ventilgehäuse 3 geführten, eine Druckfeder 4 aufnehmenden Ventilstößel 1, wobei ein am Ventilstößel 1 angeformtes und mit einem Ventilsitz 9 korrespondierendes Ventilschließglied 10 zwischen einer von einer Druckmittelquelle kommenden Druckzufuhrleitung 11 und einer Druckrückführleitung 12 eine Verbindung herstellt, wenn der hydraulische Druck im Druckzufuhrkanal 11 einen bestimmten, voreingestellten Sollwert der Druckfeder 4 während der elektromagnetischen Erregung des Druckregelventils überschreitet, in der das Ventilschließglied 10 am Ventilsitz 9 abdichtend anliegt. Der Ventilstößel 1 ist hierzu mit der Druckfeder 4 in einem Magnetanker 14 beweglich angeordnet, der gleichfalls im domförmigen Bereich des Ventilgehäuses 3 geführt ist. Ferner ist der Ventilstößel 1 in dem vom Magnetanker 14 abgewandten Bereich in einem Magnetkern 15 sowie in einem am Ventilsitz 9 angebrachten Zentrierkäfig 13 geführt. Tangential in die Öffnung des Ventilgehäuses 3 einmündend befinden sich in diametraler Anordnung die Kanäle der Druckrückführleitungen 12, die bei in Grundstellung geöffnetem Ventilschließglied 10 eine Verbindung zur Druckzufuhrleitung 11 herstellen. Eine Feder 16 im Magnetkern 15 stützt sich im Ventilöffnungssinne am Magnetanker 14 ab.

Zur Dämpfung der Geräuschentwicklung ist das als eine Klammer, ausgebildete Reibelement 2 zwischen der Innenstirnwand des Magnetankers 14 im Ventilgehäuse 3 und der am Axialanschlag 5 des Ventilstößels 1 im Magnetanker 14 anliegenden Druckfeder 4 eingespannt, wobei das somit eingespannte Reibelement 2 mit seiner Innenfläche zumindest punktförmig am Ventilstößel 1 reibschlüssig anliegt.

Die Figur 2 zeigt eine vergrößert dargestellte Draufsicht auf ein nicht erfindungsgemäßes Reibelement 2, das einen für handelsübliche Drähte gebräuchlichen Profilquerschnitt aufweist. Somit besteht das Reibelement 2 aus einem kostengünstigen, leicht und präzise herzustellenden und zu prüfenden Drahtmaterial, wobei der Draht durch abgekröpfte Schenkel 8 in vorliegendem Beispiel aus seiner ursprünglichen dreieckigen Grundstruktur vorzugsweise zu einer herzförmig gebogenen Klammer plastisch verformt ist, die sich an dem strichliniert angedeuteten Kreisumfang des Ventilstößels 1 an einzelnen Berührungsstellen reibschlüssig anschmiegt. Die Enden der Schenkel 8 sind in einem spitzen Winkel aufeinander gerichtet, die ebenso wie an den Abkröpfungsstellen der Schenkel 8 bei Bedarf mit Radien definierter Größe aufgeweitet sein können. Die Enden der Schenkel 8 sind beim Anliegen des Reibelementes 2 am Ventilstößel 1 in jedem Fall voneinander geringfügig beabstandet, um eine die Reibkraft erzeugende Elastizität des Drahtmaterials auszunutzen. Das gewählte Reibelement 2 hat den Vorteil, daß es einfach und präzise auf die gewünschte Reibkraft durch entsprechende Drahtverformung voreingestellt und anschließend auf einem Prüfdorn durch Messung der Verschiebe- bzw. Reibkraft nachgeprüft werden kann. Die bereits erwähnte Herzform des Reibelementes 2 eignet sich fertigungstechnisch besonders gut zur Anpassung der erforderlichen Aufweitung der Schenkel 8, um die gewünschte Reibkraft zwischen dem Ventilstößel 1 und dem Reibelement 2 präzise einstellen zu können. Bei der Montage des Reibelementes 2 am Ventilstößel 1 wird nämlich mit der Aufweitung der Schenkel 8 das Drahtmaterial in ein plastisches Fließen gebracht und damit die Reibkraft nahezu unabhängig vom Maß der Aufweitung im wesentlichen nur noch vom jeweils gewählten Drahtdurchmesser bestimmt.

### Bezugszeichenliste

- 1: Ventilstößel
- 2: Reibelement
- 3: Ventilgehäuse
- 4: Druckfeder
- 5: Axialanschlag
- 6: -
- 7: Federwindung
- 8: Schenkel
- 9: Ventilsitz
- 10: Ventilschließglied
- 11: Druckzufuhrleitung
- 12: Druckrückführleitung
- 13: Zentrierkäfig
- 14: Magnetanker
- 15: Magnetkern
- 16: Feder

## Patentansprüche

1. Druckregelventil, insbesondere zur Druckmittelsteuerung in schlupfgeregelten, hydraulischen Bremsanlagen, mit einem in einem Ventilgehäuse (3) geführten, eine Druckfeder (4) aufnehmenden Ventilstößel (1), wobei ein am Ventilstößel (1) angeformtes und mit einem Ventilsitz (9) korrespondierendes Ventilschließglied (10) zwischen einer von einer Druckmittelquelle kommenden Druckzufuhrleitung (11) und einer Druckrückführleitung (12) eine Verbindung herstellt, wenn der Druck einen bestimmten voreingestellten Sollwert erreicht, wobei mindestens ein mit dem Ventilstößel (1) in Eingriff stehendes Reibelement (2) an radialen Reibflächen des Ventilstößels (1) anliegt, **dadurch gekennzeichnet, daß** das Reibelement (2) mit Schenkeln (8) versehen ist, die punkt- oder linienförmig den Ventilstößel (1) kontaktieren, und daß das Reibelement (2) die Gestalt eines Polygons aufweist.

2. Druckregelventil nach Anspruch 1, **dadurch gekennzeichnet, daß** das Reibelement (2) zwischen der Innenstirnwand eines den Ventilstößel (1) aufnehmenden Magnetankers (14) und der Druckfeder (4) ortsfest eingespannt ist.

3. Druckregelventil nach Anspruch 1 oder 2, **dadurch gekennzeichnet, daß** das Reibelement (2) aus einem abgekröpften Draht besteht, der den Ventilstößel (1) klammerartig umgreift und dessen abgekröpfte Schenkel (8) Radien definierter Größe aufweisen.

4. Druckregelventil nach Anspruch 3, **dadurch gekennzeichnet, daß** die Enden der Schenkel (8) in einem spitzen Winkel aufeinander gerichtet sind, die wahlweise mit einer die Aufweitung des Reibelements (2) bestimmenden Radien versehen sind.

5. Druckregelventil nach Anspruch 1, **dadurch gekennzeichnet, daß** die Enden der Schenkel (8) beim Anliegen des Reibelementes (2) am Ventilstößel (1) voneinander beabstandet sind.

6. Druckregelventil nach Anspruch 1, **dadurch gekennzeichnet, daß** nach der Montage des Reibelements (2) am Ventilstößel (2) die Schenkel (8) plastisch verformt sind.

7. Druckregelventil nach Anspruch 3, **dadurch gekennzeichnet, daß** die Reibung zwischen Ventilstößel (1) und Reibelement (2) vom gewählten Durchmesser des Drahtes abhängig ist.

## Claims

1. Pressure control valve, more particularly, for pressure fluid control in slip-controlled hydraulic brake systems, which includes a valve tappet (1) that is guided in a valve housing (3) and accommodates a compression spring (4), wherein a valve closure member (10) which is shaped on the valve tappet (1) and corresponds with a valve seat (9) establishes a connection between a pressure supply conduit (11) extending from a pressure fluid source and a pressure return line (12) when the pressure reaches a defined preset nominal value, wherein at least one friction element (2) that is in engagement with the valve tappet (1) bears against radial friction surfaces of the valve tappet (1),
**characterized in that** the friction element (2) includes legs (8) which contact the valve tappet (1) in a punctiform or linear fashion, and **in that** the friction element (2) has the shape of a polygon.

2. Pressure control valve as claimed in claim 1,
**characterized in that** the friction element (2) is compressed stationarily between the inside end wall of a magnetic armature (14) that accommodates the valve tappet (1) and the compression spring (4).

3. Pressure control valve as claimed in claim 1 or 2,
**characterized in that** the friction element (2) is made of a deflected wire embracing the valve tappet (1) like a clip and having deflected legs (8) with radii of a defined magnitude.

4. Pressure control valve as claimed in claim 3,
**characterized in that** the ends of the legs (8) point to one another at an acute angle and optionally have radii that determine the expansion of the friction element (2).

5. Pressure control valve as claimed in claim 1,
**characterized in that** the ends of the legs (8) are spaced from each other when the friction element (2) is in abutment on the valve tappet (1).

6. Pressure control valve as claimed in claim 1,
**characterized in that** the legs (8) are deformed plastically after the friction element (2) is mounted on the valve tappet (2).

7. Pressure control valve as claimed in claim 3,
**characterized in that** the friction between the valve tappet (1) and the friction element (2) depends on the selected diameter of the wire.

## Revendications

1. Valve de régulation de pression, notamment pour la commande d'agent de pression dans des installations de freinage hydraulique à régulation du glissement, comprenant une tige-poussoir de valve (1) guidée dans un boîtier de valve (3) et recevant un ressort de compression (4), tandis qu'un obturateur de valve (10) réalisé au formage sur la tige-poussoir de valve (1) et correspondant à un siège de valve (9) réalise une communication entre une ligne d'arrivée de pression (11) provenant d'une source d'agent de pression et une ligne de retour de pression (12) lorsque la pression atteint une valeur de consigne déterminée réglé au préalable, tandis qu'au moins un élément de friction (2) venant en prise sur la tige-poussoir de valve (1) s'appuie sur des surfaces de friction radiales de la tige-poussoir de valve (1), **caractérisée en ce que** l'élément de friction (2) est pourvu de branches (8) qui viennent au contact de la tige-poussoir de valve (1) suivant une forme ponctuelle ou linéaire et **en ce que** l'élément de friction (2) présente la forme d'un polygone.

2. Valve de régulation de pression suivant la revendication 1, **caractérisée en ce que** l'élément de friction (2) est interposé sous tension, à demeure, entre la paroi frontale intérieure d'une armature mobile (14) recevant la tige-poussoir de valve (1) et le ressort de compression (4).

3. Valve de régulation de pression suivant la revendication 1 ou 2, **caractérisée en ce que** l'élément de friction (2) est en fil métallique plié qui entoure en forme de pince la tige-poussoir de valve (1) et dont des branches (8) pliées comportent des parties courbes d'une grandeur définie.

4. Valve de régulation de pression suivant la revendication 3, **caractérisée en ce que** les extrémités des branches (8), qui présentent au choix des parties courbes déterminant la possibilité d'ouverture de l'élément de friction (2), font un angle aigu l'une vis-à-vis de l'autre.

5. Valve de régulation de pression suivant la revendication 1, **caractérisée en ce que**, lorsque l'élément de friction (2) est appliqué en appui sur la tige-poussoir de valve (1), les extrémités des branches (8) sont espacées l'une de l'autre.

6. Valve de régulation de pression suivant la revendication 1, **caractérisée en ce qu'**après le montage de l'élément de fiction (2) sur la tige-poussoir de valve (1), les branches (8) sont déformées plastiquement.

7. Valve de régulation de pression suivant la revendication 3, **caractérisée en ce que** le frottement entre la tige-poussoir de valve (1) et l'élément de friction (2) dépend du diamètre choisi du fil métallique.
